# EUROPEAN PATENT APPLICATION

(11) **EP 1 481 594 A1**
(43) Date of publication of application: **01.12.2004**
(21) Application number: 04076598.4
(22) Date of filing: 27.05.2004
(51) Int. Cl.: A23G 9/28, A23G 9/02

(54) **Ice-cream machine**

(30) Priority: 27.05.2003 NL 1023547
(71) Applicant: Flex Development B.V., 2628 XG Delft (NL)
(72) Inventor: Verbrugge, Jeroen Klaasjan, 3151 VJ Hoek van Holland (NL)
(74) Representative: Volmer, Johannes Cornelis

(57) **Abstract**

The invention relates to a device for dispensing consumption ice, in particular icecream,
which comprises one or more releasable, preferably cylindrically shaped containers. These containers are adapted to contain a supply of ice to be dispensed. Each container has a dispensing opening through which the ice can be pressed from the container. To the containers, a dosing unit is coupled for the pressing of ice from each of the individual containers portion by portion. The device further comprises curl-forming means which give the ice the shape of a curl after the ice has been pressed from the container.

## Description

The invention relates to a device for dispensing ice suitable for human consumption, more in particular icecream.

US 4,707,997 describes a system and a method for dispensing frozen foods, more in particular icecream. The known device comprises a number of storage chambers, in which icecream is present. A hydraulically, pneumatically or otherwise actuated piston presses the ice from the storage chamber against an essentially semi-spherical spoon which faces the storage chamber with its hollow side. The spoon is rotatable to a position in which the hollow side of the spoon faces away from the storage chamber, such that a massive spherical portion of the ice is dispensed. In this position the sphere of ice is removed from the spoon by means of a scraper and the sphere of ice drops under the influence of gravity from the spoon, for example in a cup or horn which is held under the spoon. US 4,707,997 shows such a device in which three storage chambers are arranged next to each other.

EP 1 166 642 shows a dispensing device for frozen desserts, such as soft ice. In this known device, a supply of ice is accommodated in a vertically arranged storage chamber. The ice is pressed through a dispensing channel to the outside by means of a piston. The ice leaves the channel as a downwardly directed stream, which enters into a container which is which is to be positioned below the nozzle.

The massive spheres of ice which are dispensed by the known device according to US 4,707,997 have an factory-like appearance, are not pleasant to eat and cause problems when a plurality of spheres has to be arranged in a single horn. On the other hand, devices which dispense the ice in the form of a flow, like the one from EP 1 166 642, require the skill of the operating personel in order to produce an attractively looking icecream.

It is the object of the invention to provide an improved device for dispensing ice fit for human comsumption, which dispenses attractively looking portions of icecream, and which in een preferred embodiment can be operated by the consumer himself.

This object is achieved by means of a device according to claim 1.

Icecream with a curly shape, as opposed to the known massive sphere of icecream or the flow of soft ice, is associated by the consumer with traditionally prepared icecream, which is scooped out of trays by the ice salesman. With the device according to the invention it is possible to dispense icecream with such a shape by means of a device. To this end, the device is provided with curl-forming means, which during dispensing give the dispensed ice the form of a curl.

The curl-forming means kan be realised in various ways.

A possible embodiment is a suitably formed curling chamber element. Such a curling chamber element comprises a ring wall, which extends around a curling chamber, in which the ice is rolled into a curl. The ring wall preferably has a substantially round or elliptical cross-section. In the ring wall, an inlet opening for a flow of ice is provided. This inlet opening is preferably tangentially directed with respect to the inner side of the ring wall. This way, ice that is dispensed from a container, in which a supply of ice is arranged, in the form of a flow, is directed tangentially against the inner side of the ring wall.

Preferably, the chamber which is enclosed by the ring wall, is on one side, which is axially arranged with respect to the ring wall, at least partially limited by a back wall, which prevents that the flow of ice leaves the curling chamber element on the side of the backwall. The backwall can for example be flat but it can also form a substantially semi-spherical inner surface of the chamber together with the ring wall.

Preferably, the curling chamber is open on one side, on the opposite side with respect to a possible back wall, such that the formed curl of ice can be dispensed via the open side. Preferably, the front rim of the ring wall limits this opening.

On the side of the curling chamber element which is opposed to the backwall, possibly a closing organ with a closing face is arranged. Such a closing face closes the space which is limited by the ring wall during the forming of a curl of ice. When the portion of ice is formed into a curl, the space which is limited by the ring wall is opened again, and the ice can be dispensed from the curling chamber element.

In use of this device according to the invention, first the ice is pressed from a container in the form of a flow through a dispensing opening. This flow is directed by a supply channel or a guide to the inlet opening of the curling chamber element. At least the last part of the supply channel or the guide is arranged such that the flow of ice is brought substantially tangentially against the inner side of the ring wall. The flow then follows the inner side of the ring wall and in this way acquires the shape of a curl. The flow of ice is this way sort of rolled up. It will be clear that preferably no continous flow of ice is supplied to the curling chamber, but every time a portion which is sufficient for the forming of a curl of ice. Preferably this curl breaks automatically from the flow of ice in the supply channel; possibly separation means are provided to realise this breaking.

In a possible embodiment the ring wall is arranged in a vertical plane, but also other arrangements are possible.

In a possible embodiment the curling chamber element is designed and arranged in such a manner that when the curling chamber element is filled, the center of gravity of the dispensed portion of ice is such that the portion of ice falls from the curling chamber element into a cup or horn that is arranged under the curling chamber element.

In a possible embodiment it is envisaged that the curling chamber element is arranged to make to or more flavours of ice curl together. In this embodiment, the curling chamber element can be provided with two or more inlet openings and two or more supply channels or guides. As an alternative, the two flows of ice of a different flavour can be brought together to a single flow before they enter the curling chamber element.

Also in other ways a curl can be formed. If, when looking over the surface of the dispensing opening of a container, on one side more ice flows through per unit of time than on the other side, the curl of ice will curl by itself when the ice has the right composition. This way, a curl can be created without the dispensed ice coming into contact with a part of the device. This is especially advantageous from a hygenic point of view. This contactless creating of a curl can be realised by means of a special nozzle which is arranged at the dispensing opening of the container. In this case, the nozzle acts as the curl-forming means.

In a different embodiment, the curled shape of the ice is created by guiding the ice through a helical channel before it leaves the device. Possibly two or more helical channels are combined with each other, such that two or more flavours of ice together are formed into a combined curl.

Experiments have shown that it is favourable when the dispensing opening has the form of a cresent or sickle. Such a dispensing opening is preferably applied in combination with a curling chamber element or nozzle.

In a advantageous embodiment, the device comprises a plurality of ice supply containers which are arranged in a turret. Preferably, each of the containers contains a different of flavour of ice than the other containers. By arranging the containers into a turret, it is possible to arrange a relatively large number of containers on a small surface. In such an embodiment, preferably selection means are present by means of which the consumer can determine himself what flavour the ice dispensed by the device will be. Preferably, after the choice has been made the turret rotates to a position in which the container with the ice of the chosen flavour is arranged on the side of the user.

It is possible that each of the containers is provided with its own dosing unit, but also that the device comprises a single dosing unit, which every time only acts on the chosen container.

Preferably such a dosing unit operates by means of compressed air. By this compressed air an increased pressure is created on the back of the supply of ice (that is the side opposed to the side where the dispensing opening is present), by which the ice is pressed to the outside through the dispensing opening. Also other embodiments are possible, such as an embodiment in which a piston is actuated by means of compressed air, or in which a hydraulically or mechanically driven piston is present.

It is provided that the package of a supply of the ice to be dispensed is designed such that it acts as a container too. Such a package can be put into the device directly as a container. Such a package can be designed as a cylindrical sleeve from a firm plastic, which is filled with icecream. At the end of such a package a removable or breakable seal is present. After the removal of this seal the package can directly be positioned in the device.

As an alternative for the package described above, it is provided that a supply of ice is supplied in a package which as a whole can be arranged in a container. Possible seals or closures of the package can be removed before or after positioning the package in the container. This way the containers can be refilled quickly and the costs of the package are kept low, because the package does not have to be capable of withstanding the process forces during het dispensing of the ice.

The package of a supply of the consumption ice to be dispensed can be realised in such a way that the contents of the package equals a part, for example one third of a quarter, of the volume in the container. This way it is prevented that remains of ice have to thrown way when refilling the container, or that one has to wait with refilling until the container is entirely empty.

It is provided that a paying unit is added to the device according to the invention, which paying unit makes that only after payment a portion of the ice is dispensed. It is envisaged that payment by means of coins or by means of an electronic system is used.

The device according to the invention can be used in combination with different types of ice, such as icecream, icecream with an addition (such as pieces of chocolate and pieces of nut), sorbet ice of yoghurt ice.

The device according to the invention will be explained by means of the enclosed drawing, in which in a non-limiting way examplary embodiments are shown.

The drawing shows in:
fig. 1 an overview of the device according to the invention, with a closed housing,
fig. 2 an overview of the device according to the invention with an opened housing,
fig. 3 a turret with five containers,
fig. 4 the refilling of a container,
fig. 5 an embodiment of the device according to the invention, with two curling chamber elements and a cooling/cleaning position,
fig. 6a-d different stages of the dispensing of a portion of consumption ice by a device according to the invention,
fig. 7a-c details of different stages of the curling of a flow of consumption ice.

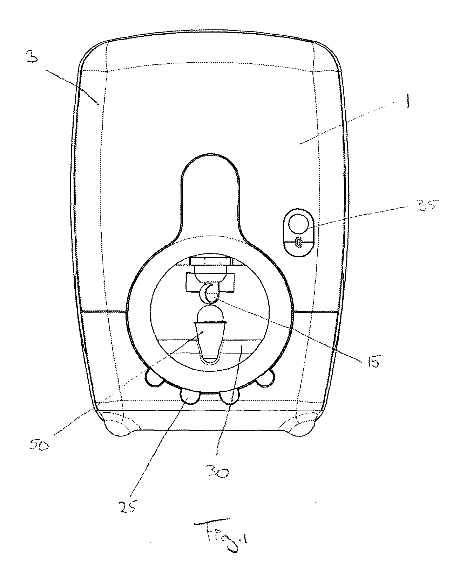

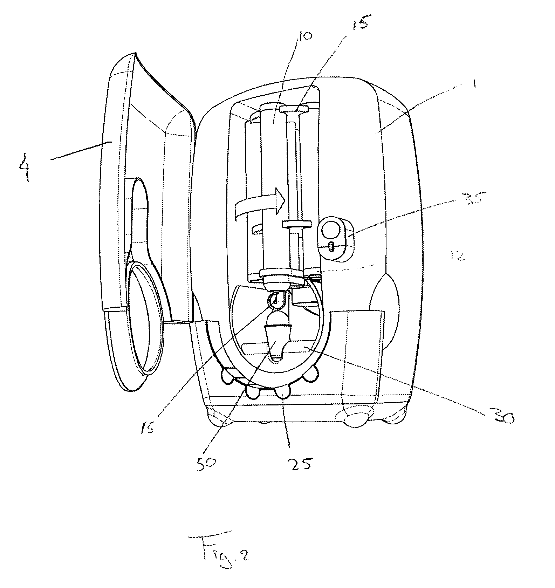

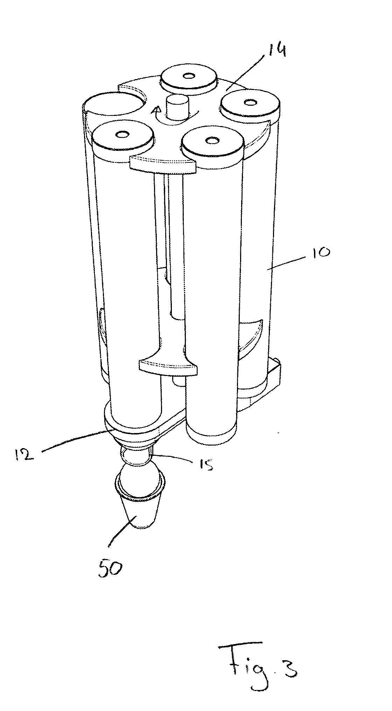

Fig. 1 and 2 show a possible embodiment of the device 1 according to the invention. In the shown embodiment the device comprises five containers 10 which are each filled with consumption ice of a different flavour. Below one of the containers 10 a curling chamber element 15 is present. Below the containers 10 a tray 30 is arranged. In this tray 30 a notch is present in which a horn or cup 50 can be placed. The moving parts of the device 1 are at least mainly shielded by means of a housing 3. Inside this housing 3 also a cooling unit is present, which takes care of keeping the ice in the containers 10 at the desired temperature. The housing can be opened by means of opening door 4.

The containers 10 are formed by vertically arranged cylinders. The cylinders are for example made of a strong, possibly transparent plastic. At the underside of the containers 10 a lower plate is present which is provided with a dispensing opening 11.

Below one of the containers a curling chamber element 15 is present which curling chamber element 15 has a ring wall and a back wall, which together limit a curling chamber wall with an, in this embodiment, substantially semi-spherical inner face. The curling chamber is open at the front side and the free edge of the ring wall, which forms an opening, is substantially in a plane which is a vertical or at a slight angle with the vertical.

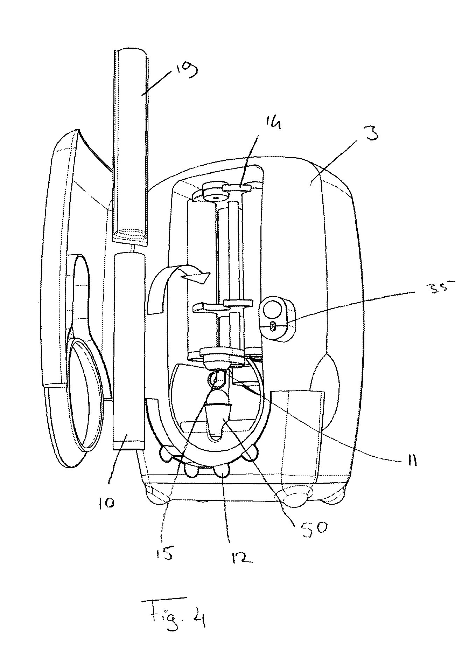

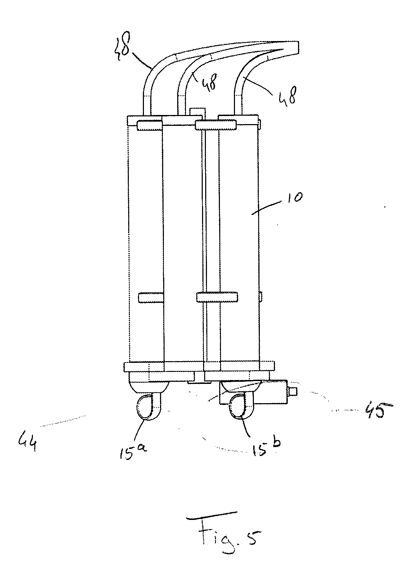

Fig. 3 shows that the containers are arranged in a turret 14, which is rotatably arranged around an axis 13. This allows rotation of the turret 14 relative to the housing 3. The user can determine which flavour of ice he wants to have by means of the selection means 25. The turret 14 rotates then until the container with the desired contents comes above the curling chamber element 15. When the turret 14 has reached this position, the dosing unit 20 is activated, and a portion of ice is dispensed from the container 10 concerned.

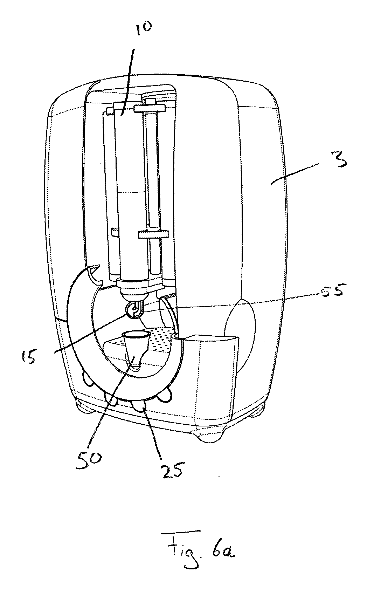

Preferably, the ice is supplied packaged in packing cylinders 19 which can be araranged directly in the containers 10. The packing cylinders 19 are preferably closed at both ends with a breakable or removable seal, for example a foil. After the removing or the breaking of these seals, such a packing cylinder 19 can be placed in a container 10. In this context, it is possible to design the containers 10 in such a way that they can be taken off the turret 14. This makes the refilling easier. These things are shown in fig. 4. It is however also possible that the packing cylinder 19 contains an amount of ice which equals a part of het entire contents of a container 10, for example a quarter or one third thereof. This makes the refilling of the container concerned before it is entirely empty easier.

The dispensing opening 11 has in the shown example the shape of a crescent. Practice has shown that this offers good results.

From hygenic point of view it is very desirable that all elements that come into contact with the ice are within a cooled space. In addition to or as an alternative such elements can be cleaned after each contact with the ice. It can be desirable that the curling chamber element 15 is somewhat warmer than the ice for this improves the sliding of the ice over the curling chamber element. In that case it is of importance that the curling chamber element 15 is cleaned between the dispensing of two subsequent portions of ice.

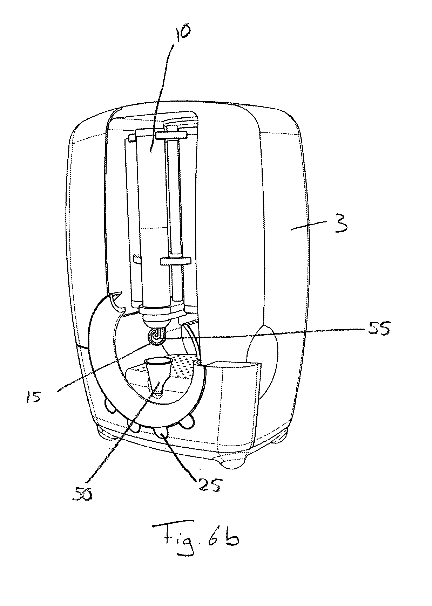

Fig. 5 shows a possible embodiment in which the device comprises two curling chamber elements 15a, 15b. While the first curling chamber element 15a is used for curling of ice, the second curling chamber element 15 is cleaned and/or cooled. After a portion of the ice is dispensed, the first and the second curling chamber element 15a, 15b swap places; the second curling element 15b will curl a subsequent portion of ice, while the first curling chamber element 15a will be cleaned and/or cooled. The first and second curling chamber elements 15a, 15b are in this way alternatingly in the using position 44 and in a cooling and/or cleaning position 45.

In a possible embodiment, the dosing unit 20 comprises a piston 21 which presses the ice from the container through the dispensing opening to the outside. This piston can be driven by mechanical or hydraulic driving means. Also, in space 22 an increased pressure can be applied, such that the piston presses the ice to the outside. In a preferred embodiment however, no piston is present. In space 23 such a high pressure will be applied that the ice is pressed out of the ocntainer 10. This has the advantage that the number of moving parts is limited. In addition, in that case it is easier to place a new, full container in the device, because alignment problems with the piston are prevented this way.

Fig. 5 shows an embodiment in which to each container 10 a supply 48 for a pressure medium, such as pressurized air, is coupled.

It is possible that the device according to the invention comprises a payment unit 35 which makes that only after payment a portion is dispensed by the device. This payment can be realised by means of coins or in an electronic way.

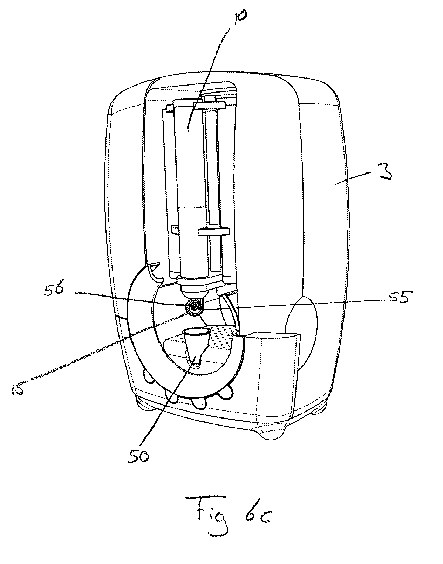

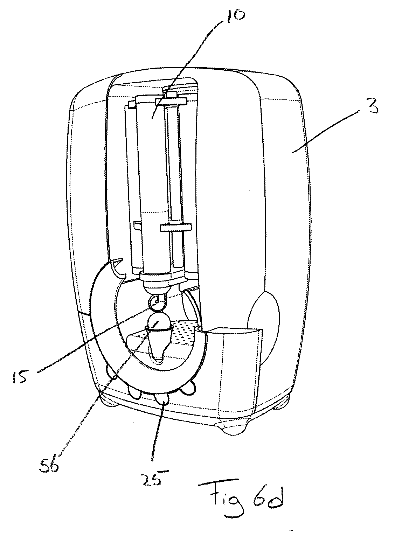

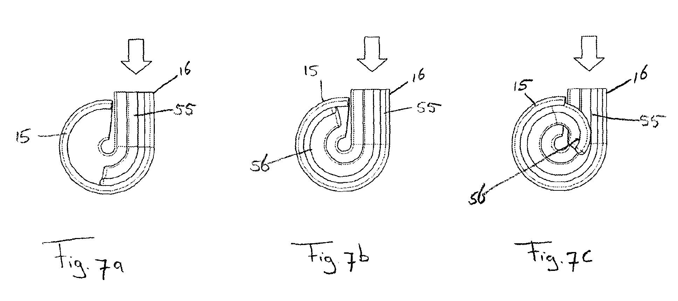

Fig. 6a-d and fig. 7a-c show different stages of the dispensing of a portion of ice by the device according to the invention. At the start, the user will operate the selection means 25 for selecting a particular flavour of ice. The turret then turns the container 10 in which the icecream concerned is present to a position above the curling chamber element 15. A horn or cup 50 is placed in the tray 30 below the curling chamber element 15. This can be done by hand, but also automatically. Then, the dosing unit 20 is actuated in a selective way, such that the increased pressure in space 22 of the container 10 in which the chosen flavour of ice is present is built up. Due to this, ice from the container 10 concerned is pressed through the dispensing opening 11. First, the ice will leave the dispensing opening 11 in a substantially straight flow. At the moment that the flow 55 encounters the ring shaped inner wall of the curling chamber element 15, the wall of the curling chamber element 15 will bend the path of the flow 50, so that the ice acquires the shape of a curl. The curl forms substantially along the substantially semi-spherical inner face of the curling chamber element 15. Fig. 6b shows the ongoing process, in which the curling chamber element 15 is filled entirely or partly with ice.

In the situation of fig. 6c, the curling chamber element 15 is entirely or almost entirely filled with curled ice 56. Fig. 6d shows the situation in which the curled ice has fallen from the curling chamber element 15 into the horn or cup 50.

Fig. 7a-c show the curling of the ice in detail. Here the situation of fig. 7a substantially equals the situation of fig. 6a, the situation of fig. 7b equals substantially the situation of fig. 6b and the situation of fig. 7c substantially equals the situation of fig 6c.

In the embodiment of the invention shown in fig. 6, the curling chamber element 15 is attached rigidly to plate 12. This is possible because the curling chamber element 15 is arranged such that when a portion of ice has filled the curling chamber element 15, this portion of ice falls from the curling chamber element 15 into the horn or cup 50 under the influence of gravity. This is shown in fig. 6b. As an alternative, the curling chamber element 50 can also be arranged in such a manner that it can swivel. Also, the curling chamber element can be arranged with its hollow side substantially directed upwards below the dispensing opening, or with its hollow side in a position between directed upwards and directed sidewards. Preferably, the curling chamber element 15 with its opening faces the user of the device 1, such that the user sees the ice curl.

In a variety that is not shown in the drawings, a closing organ can be provided which closes the opening in the curling chamber during the forming of a curl of ice.

## Claims

1. Device for the dispensing of ice for human consumption, more in particular icecream,
which comprises:
- one or more preferably cylinder shaped storage containers, which are preferably removable from the device and which are adapted to each contain a supply of the ice to be dispensed, which containers each have a dispensing opening, through which the ice is pressed out of the storage container concerned,
- a dosing unit for pressing the consumption ice out of the storage container portion by portion,
**characterized in that**
the device further comprises curl-forming means which give the ice the form of a curl after the ice has been pressed from the storage container.

2. Device according to claim 1, in which the curl-forming means roll up the ice.

3. Device according to one of the preceding claims, in which the curl-forming means comprise a curling chamber member.

4. Device according to claim 3, in which the curling chamber member comprises a ring wall, which extends around a curling chamber, in which the ice is rolled into a curl, in which the ring wall preferably has a substantially round or elliptical cross-section, and in which preferably the ring wall is provided with an inlet opening for a flow of ice, preferably in such a way that in use the flow of ice is directed tangentially relative to the inner side of the ring wall.

5. Device according to claim 4, in which the chamber which is surrounded by the ring wall is on one side, which is axially orientated relative to the ring wall, at least partly limited by a back wall, which back wall prevents the flow of ice leaving the curling chamber member at the side of the back wall, in which preferably the back wall together with the ring wall forms a substantially semi-spherical inner face of the chamber.

6. Device according to one of the claims 4 or 5, in which the curling chamber on one side, opposed to a possible back wall, is open, such that the formed ice curl can be dispensed via the open side, and in which preferably a operable closing member with a closing face is provided, which closes the curling chamber during the forming of a curl of ice and opens for dispensing the curl of ice.

7. Device according to one or more of the claims 4-6, in which a supply channel or guide is associataed with the curling chamber member which supply channel or guide directs the ice from the dispensing opening of the storage container to the inlet opening of the curling chamber member, in which preferably at least the last part of the supply channel or the guide is arranged such that the flow of ice is brought substantially tangentially against the inner side of the ring wall.

8. Device according to one or more of the claims 4-7, in which the ring wall of the curling chamber member is in a vertical plane.

9. Device according to one or more of the claims 3-8, in which the device comprises at least two curling chamber members and a cleaning station, which cleaning station is adapted to clean a curling chamber member while an other curling chamber member forms ice into a curl or is ready to form ice into a curl.

10. Device according to one or more of the claims 3-9, in which the curling chamber member is open during the forming of the curl and the opening faces the user of the device.

11. Device according to claim 1, in which the curl-forming means comprise a nozzle.

12. Device according to one of the preceding claims, in which the device further comprises a turret, in which a plurality of containers is arranged, which are preferably adapted to each contain a different flavour of ice.

13. Device according to one or more of the preceding claims, in which the device comprises a selection means which actuates the dosing unit in a selective manner, such that the user can select from which container he wants ice to be dispensed by the device.

14. Device according to one of the preceding claims, in which a supply of ice, which is suitable for filling a container or a part thereof is packaged in a packing cylinder, which can be placed in a container.

15. Device according to one of the preceding claims, in which the dispensing opening has the shape of a crescent.

16. Device according to one of the preceding claims, in which the dosing unit comprises a piston, which presses the ice out of the container.

17. Device according to one of the preceding claims, in which the dosing unit presses the ice out of the container by means of applying an increased pressure inside the container, at the side of the ice in the container which is opposite to the side at which the dispensing opening is present.

18. Device according to one of the preceding claims, in which the device further comprises a payment unit, which makes that only after payment a portion of ice is dispensed.

19. Package for ice, which ice is suitable for human consumption, which package is adapted to be used in combination with a container of a device according to one of the preceding claims.

20. Method for dispensing of ice suitable for human consumption, more in particular icecream,
which comprises the following steps:
- the placing of one or more containers in a device according to one of the preceding claims, in which in each of the containers ice to be dispensed is present,
- coupling of the dosing unit with one or more of the containers,
- actuating the dosing unit in such a way that an amount of ice is dispensed from a container substantially in the form of a flow,
- receiving the dispensed ice in a curling chamber element, by which the curling chamber element forms the ice which is dispensed substantially as a flow into a curl.
